# EUROPÄISCHE PATENTSCHRIFT

(11) **EP 1 279 853 B1**
(45) Veröffentlichungstag und Bekanntmachung des Hinweises auf die Patenterteilung: **06.04.2005**
(21) Anmeldenummer: 02016228.5
(22) Anmeldetag: 19.07.2002
(51) Int. Cl.: F16D 65/095, F16D 55/00

(54) **Bremsbackenabstützvorrichtung**
Brake pad support
Support de patin de frein

(30) Priorität: 23.07.2001 DE 10135796
(43) Veröffentlichungstag der Anmeldung: 29.01.2003
(73) Patentinhaber: KNORR-BREMSE Systeme für Schienenfahrzeuge GmbH, 80809 München (DE)
(72) Erfinder: Wirth, Xaver, 85737 Ismaning (DE)
(74) Vertreter: Mattusch, Gundula

(56) Entgegenhaltungen:
- EP-A- 0 501 856
- EP-A- 0 749 882
- DE-A- 19 746 443

## Beschreibung

Die vorliegende Erfindung betrifft eine Abstützvorrichtung für Bremsbacken von Schienenfahrzeugen gemäß dem Oberbegriff des Patentanspruches 1.

Eine derartige Abstützvorrichtung ist aus der DE 197 46 443 A1 bekannt. Bei dieser Bremsbackenabstützvorrichtung ist eine Bremsbacke einer Scheibenbremse eines Schienenfahrzeuges über ein Y-förmiges Abstützelement, das als "Y-Hängelasche" bezeichnet wird, gelenkig mit einem Drehgestellrahmen des Schienenfahrzeuges verbunden. Bei einem Bremsvorgang werden von der drehenden Bremsscheibe in Umfangsrichtung wirkende Bremskräfte auf die Bremsbacke übertragen und über die Y-Hängelasche in den Drehgestellrahmen eingeleitet.

Eine sehr ähnliche Bremsbackenabstützvorrichtung für Scheibenbremsen von Schienenfahrzeugen ist aus der DE 692 00 244 T2 bekannt.

Des weiteren ist aus der DE-AS 16 05 853 eine Klotzbremse bekannt, bei der die in Umfangsrichtung wirkenden Bremskräfte durch ein gabelförmiges Abstützelement aufgenommen werden.

Aus der eingangs genannten DE 197 46 443 A1 sind ferner I-förmige und H-förmige Hängelaschen bekannt. Bei einer "I-Hängelasche" tritt das Problem auf, dass die Bremsbacke bzw. der daran angebrachte Bremsbelag nicht ausreichend geführt werden, so dass am Bremsbelag ein in Radialrichtung der Bremsscheibe zunehmender Verschleiß auftritt, der als Schrägverschleiß bezeichnet wird. Dies ist unerwünscht, da der Bremsbelag vorzeitig ausgetauscht werden muss.

Die der "H-Hängelasche" zugrunde liegende Idee ist es, die in Umfangsrichtung der Bremsscheibe wirkenden Bremskräfte möglichst symmetrisch in beide "Seitenarme" einzuleiten und dadurch die Führung der Bremsbacke zu verbessern, um den Schrägverschleiß zu verringern. Aufgrund unvermeidlicher Einbautoleranzen, z.B. beim Einbau einer Zugstange oder eines Betätigungszylinders der Bremse lässt sich eine absolut symmetrische Krafteinleitung kaum erreichen. Somit wird häufig primär nur ein Zuglaschenteil der H-Hängelasche beansprucht, während der zweite nur bei sehr großen Bremskräften belastet wird. Ferner liegt bei einer H-Hängelasche eine statisch unbestimmte Lagerung der Bremszange, die als Verbindungselement zwischen dem Betätigungszylinder und der Bremsbacke fungiert, vor. Hierdurch entsteht eine ungewollte Elastizität der gesamten Bremsbackenaufhängung, so dass die Bremsbacke in Schwingungen geraten kann und unerwünscht laute Bremsgeräusche auftreten.

Auch bei Verwendung der eingangs genannten herkömmlichen Y-förmigen Hängelaschen werden die Bremsbeläge bei einer Bremsbetätigung nicht exakt parallel an die Bremsscheibe herangeführt, was zu einem "Schrägverschleiß" der Bremsbeläge führt. Der Grund dafür sind unter anderem einbaubedingte Bolzen- und Buchsenspiele.

Insbesondere wenn Bremsbeläge nur ein relativ geringes zulässiges Verschleißmaß aufweisen, ist Schrägverschleiß aus wirtschaftlichen Gründen möglichst zu vermeiden.

Aufgabe der Erfindung ist es, eine Abstützvorrichtung zu schaffen, bei der Schrägverschteiß an den Bremsbelägen nicht auftritt und die kostengünstig herstellbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Hängelasche, die einen parallel zu ihrer Längsrichtung verlaufenden "seitlichen" Ausleger bzw. Führungsarm aufweist.

Die Hängelasche ist an ihren beiden Enden über Schwenkgelenke mit der Bremsbacke bzw. mit einem Bremskräfte aufnehmenden Teil des Schienenfahrzeuges, z.B. mit dem Drehgestell verbunden. Der Führungsarm der Hängelasche erstreckt sich auf der Seite bzw. im Bereich eines der beiden Schwenkgelenke parallel zur Längsrichtung der Hängelasche und weist eine längliche Ausnehmung auf, in der ein Gelenkbolzen des zugeordneten Schwenkgelenks geführt ist. Der Führungsarm hat also die Funktion einer Gabel- bzw. Kulissenführung.

Der Gelenkbolzen ist somit in einer Richtung senkrecht zur Bremsscheibe fest und in einer Tangentialrichtung zur Bremsscheibe, d.h. in Längsrichtung der Hängelasche, verschieblich im Führungsarm geführt.

Ein derartiger "zusätzlicher Führungsarm" kann sowohl bei einer Y-förmigen Hängelasche als auch bei einer I-förmigen Hängelasche vorgesehen sein.

Bei Verwendung einer Y-förmigen Hängelasche wird durch den gemäß der Erfindung zusätzlich vorgesehenen Führungsarm der optimale Kraftfluss, d.h. die "symmetrische" Kraftaufteilung nicht beeinträchtigt. Gleichzeitig wird durch den Führungsarm eine Verdrehung bzw. Torsion der Bremsbacke gegenüber der Aufhängung im Drehgestell des Schienenfahrzeuges verhindert.

Eine Hängelasche mit einem Führungsarm gemäß der Erfindung vereint somit die Vorteile der I- bzw. Y-Hängelasche mit denen der H-Hängelasche. Der Hauptnachteil der H-Hängelasche, der in der statisch unbestimmten Lagerung besteht, tritt bei der erfindungsgemäßen Hängelasche jedoch nicht auf, da der Gelenkbolzen im Führungsarm längsverschieblich ist und eine Schrägstellung im Rahmen der Bolzenspiele zulässt und somit eine statisch bestimmte Lagerung vorliegt.

Nach einer Weiterbildung der Erfindung ist die Ausnehmung im Führungsarm ein Durchgangslangloch, welches der Gelenkbolzen durchsetzt, was eine kostengünstige Herstellung und Montage ermöglicht.

Vorzugsweise sind die Berührflächen des Gelenkbolzens und des Führungsarmes eben. Das heißt der Gelenkbolzen ist im "Eingriffsbereich" der Ausnehmung des Führungsarmes nicht zylindrisch, sondern abgeflacht. Die effektive Berührfläche ist somit größer als bei einer zylindrischen Bolzenkontaktfläche, was eine noch bessere Abstützung von Torsionskräften ermöglicht.

Nach einer Weiterbildung der Erfindung ist der Führungsarm gabelförmig, d.h. einseitig offen.

Ferner kann im Bereich zwischen dem Gelenkbolzen und der Ausnehmung des Führungsarmes ein elastisches Element, z.B. ein Gummiring oder eine Weichmetallhülse angeordnet sein, wodurch eine "einstellbare" Torsionselastizität erreicht wird. Das elastische Element kann wahlweise innen an der Ausnehmung des Führungsarmes und/oder außen am Bolzen angeordnet sein.

Nach einer Weiterbildung der Erfindung ist bei einer Y-förmigen Hängelasche der Führungsarm dem "Doppelarm" der Hängelasche gegenüberliegend, d.h. parallel zu dem "Einzetarm" der Hängelasche angeordnet.

Bei einer Variante der Erfindung wird eine I-förmige Hängelasche verwendet, bei der sich der Führungsarm etwa von der Mitte der Hängelasche aus parallel zu einem ihrer Enden hin erstreckt.

Nach einer Weiterbildung der Erfindung ist eine I-Hängelasche mit zwei Führungsarmen vorgesehen, wobei sich vom "Mittelbereich" der Hängelasche zu jedem ihrer beiden Enden jeweils ein Führungsarm erstreckt. In Bezug auf die Längsachse der Hängelasche können die beiden Führungsarme entweder auf derselben "Seite" der Hängelasche oder auf gegenüberliegenden Seiten angeordnet sein. Im ersten Fall hat die Hängelasche dann eine spiegelsymmetrische und im zweiten Fall eine punktsymmetrische Form.

Im folgenden wird die Erfindung anhand eines Ausführungsbeispieles im Zusammenhang mit der Zeichnung näher erläutert. Es zeigen:
- Fig. 1: eine Bremsbackenabstützung gemäß der Erfindung;
- Fig. 2: einen Teil des Führungsarmes der Fig. 1 in Seitenansicht;
- Fig. 3: eine Einbauvariante der Hängelasche der Fig. 1;
- Fig. 4: eine I-förmige Hängelasche mit einem Führungsarm gemäß der Erfindung; und
- Fig. 5: eine I-förmige Hängelasche mit zwei Führungsarmen.

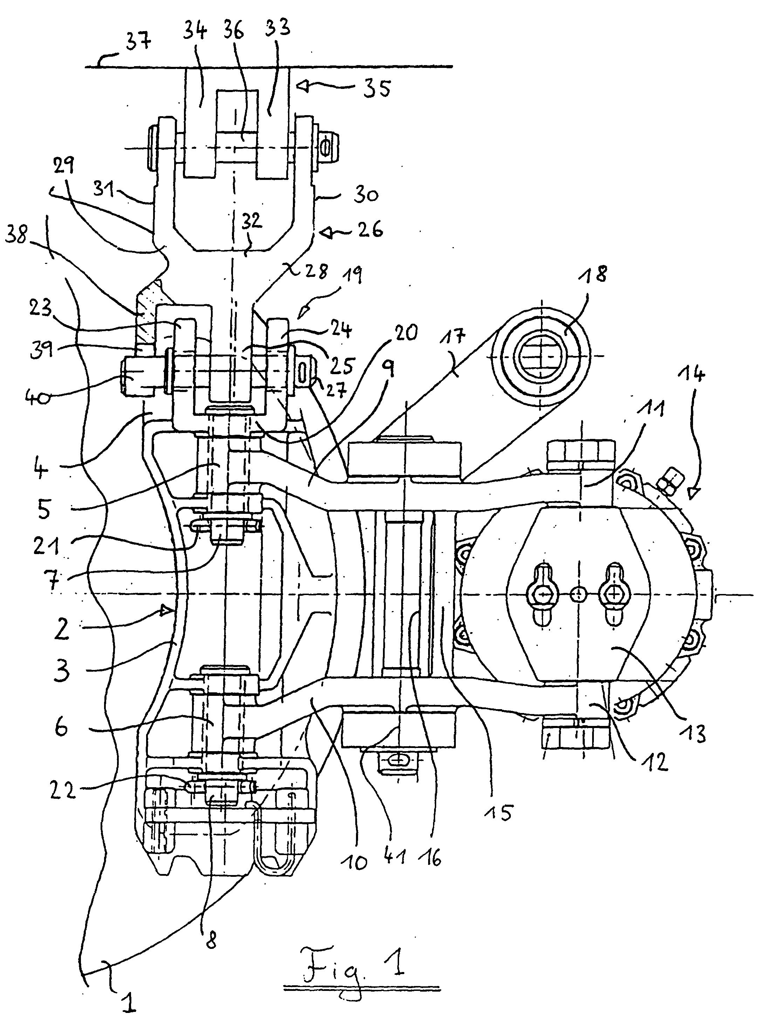

Fig. 1 zeigt eine Bremsscheibe 1, gegen die eine Bremsbacke 2 drückt. Die Bremsbacke 2 weist einen Bremsbelaghalter 3 und einen daran befestigten Bremsbelag 4 auf, der bei einer Bremsung die Bremsscheibe 1 berührt. Der Bremsbelaghalter 3 ist über Gelenke 5 und 6, die zugeordnete Lagerbolzen 7 und 8 aufweisen, mit Bremszangenhebeln 9 und 10 verbunden. Enden 11 und 12 der Bremszangenhebel 9 und 10 sind gelenkig mit einem Betätigungselement 13 eines Bremsbetätigungszylinders 14 verbunden. Auf einem Mittelabschnitt 15 sind die Bremszangenhebel 9 und 10 mittels eines Verbindungsbolzens 16 gelenkig mit einem Verbindungsteil 17 verbunden, das an einer Zugstange 18 befestigt ist. Über den Lagerbolzen 7 sind der Bremsbelaghalter 3, der Bremszangenhebel 9 und ein U-förmiger Lagerbock 19 miteinander verbunden. Ein Mittelabschnitt 20 des Lagerbocks 19 ist durch den Lagerbolzen 7 gehalten. An Enden der Lagerbolzen 7 und 8 sind zugeordnete Sicherungselemente 21 und 22 vorgesehen.

Zwischen Seitenschenkel 23 und 24 des Lagerbocks 19 ragt ein erster Arm 25 einer Y-förmigen Haltelasche 26.

Durch einen Lagerungsbolzen 27, der die beiden Seitenschenkel 23 und 24 sowie den Arm 25 durchsetzt, ist die Haltelasche 26 mit dem Lagerbock 19 verbunden. Der erste Arm 25 der Haltelasche 26 gabelt sich über zwei schräge Abschnitte 28 und 29 in zwei zum ersten Arm 25 parallele Arme 30 und 31 auf, die durch eine Verstärkungsrippe 32 verbunden sind. In einen Bereich zwischen dem zweiten und dritten Arm ragen Seitenschenkel 33 und 34 eines weiteren Lagerbocks 35. Über einen Lagerungsbolzen 36 sind der zweite und der dritte Arm der Haltelasche 26 gelenkig mit dem Lagerbock 35 verbunden. Der Lagerbock 35 ist an einem Bremskräfte aufnehmenden Teil 37 eines Schienenfahrzeuges (nicht dargestellt) befestigt. Das Teil 37 kann beispielsweise ein Drehgestell sein.

Die Haltelasche 26 weist ferner einen gabelförmigen Führungsarm 38 auf, der asymmetrisch bzgl. der Y-Form der Hängelasche 26 im wesentlichen parallel zu ihrer Längsrichtung, d.h. parallel zum ersten Arm 25 verläuft. Am freien Ende des Führungsarms 38 ist eine längliche, den Führungsarm 38 durchsetzende Führungsausnehmung 39 vorgesehen ist. Der Lagerungsbolzen 27 ist auf einer Seite über den Seitenschenkel 23 hinaus "verlängert" und weist dort einen Führungskopf 40 auf, der längsverschieblich in der "gabelförmigen" Führungsausnehmung 39 des Führungsarmes 38 ist.

Bei einem Bremsvorgang drückt das Betätigungselement 13 des Bremsbetätigungszylinders 14 die Enden 11 und 12 der Bremszangenhebel 9 und 10 nach außen, d.h. aus der Zeichenebene heraus. Die Bremszangenhebel 9 und 10 schwenken dabei um eine vertikale Schwenkachse 41 und drücken die Bremsbacke 2 bzw. den daran befestigten Bremsbelag 4 gegen die Bremsscheibe 1. Eine dabei entstehende Reaktionskraft, die senkrecht zur Bremsscheibe 1 gerichtet ist, wird auf den Bremsbelaghalter 3 und die Bremszangenhebel 9 und 10 übertragen und durch eine Zugkraft in der Zugstange 18 abgestützt.

Beim Andrücken der Bremsbacke 2 gegen die Bremsscheibe 1 führt die Haltelasche 26 eine leichte Schwenkbewegung um den Lagerungsbolzen 27 und um den Lagerungsbolzen 36 durch, solange bis der Bremsbelag 4 an der Bremsscheibe anliegt.

Bei Berühren der Bremsscheibe entsteht am Bremsbelag 4 eine Reibkraft, die parallel zur Ebene der Bremsscheibe 1 ist und deren Richtung von der Drehrichtung der Bremsscheibe, d.h. von der Bewegungsrichtung des Schienenfahrzeuges (nicht dargestellt) abhängt. Über den Lagerbock 19 wird diese Reibkraft in den ersten Arm 25 der Haltelasche eingeleitet und teilt sich gleichmäßig auf den ersten Arm 30 und auf den zweiten Arm 31 auf und wird schließlich in das Drehgestell 37 eingeleitet und dort abgestützt.

Beim "Anlegen" der Bremsbacke 2 an die Bremsscheibe 1, d.h. bei der damit verbundenen Schwenkbewegung, wird durch den in die Führungsausnehmung 39 eingreifenden Führungskopf 40 des Lagerungsbolzens 27, welcher über den Lagerbock 19 mit der Bremsbacke 2 verbunden ist, sichergestellt, dass die Bremsbacke 2 parallel zur Bremsscheibe ausgerichtet bleibt. Der Führungsarm 38 und der Führungskopf 40 haben dabei die Funktion eines "verschieblichen Lagers" bzw. eines Gleitlagers, welches eine "Tordierung" der Bremsbacke 2 und somit einen Schrägverschleiß des Bremsbelages 4 verhindert.

Aufgrund der Verschieblichkeit des Führungskopfes 40 in der Führungsausnehmung 39 des Führungsarmes 38 ist eine statisch bestimmte Lagerung der Haltelasche 26 in Bezug auf die Bremsbacke 2 sichergestellt, was ein wesentlicher Vorteil gegenüber der eingangs genannten H-Haltelasche ist.

An der Außenseite des Führungskopfes 40 bzw. an der Innenseite der Führungsausnehmung 39 kann ein elastisches Element (nicht dargestellt), wie z.B. ein Gummiring, angebracht sein. In Abhängigkeit von der Elastizität des elastischen Elementes kann eine "einstellbare" Torsionselastizität erreicht werden.

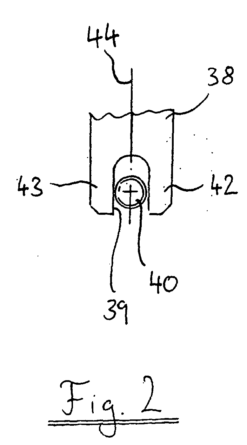

Fig. 2 zeigt eine Seitenansicht des Führungsarmes 38 der Fig. 1. Es ist ersichtlich, dass der Führungskopf 40 in der durch zwei Gabelarme 42 und 43 des Führungsarmes 38 gebildeten Führungsausnehmung 39 in einer Längsrichtung 44 des Führungsarmes 38 verschieblich angeordnet ist. In der hier gezeigten Darstellung ist der Führungskopf 40 zylinderförmig.

Alternativ dazu kann der Führungskopf 40 auch abgeflachte Berührflächen aufweisen, wodurch sich eine größere Kontaktfläche mit der Führungsausnehmung 39 ergibt.

Gemäß einer weiteren Variante kann der Führungskopf 40 auch einen rechteckförmigen bzw. quadratischen Querschnitt haben.

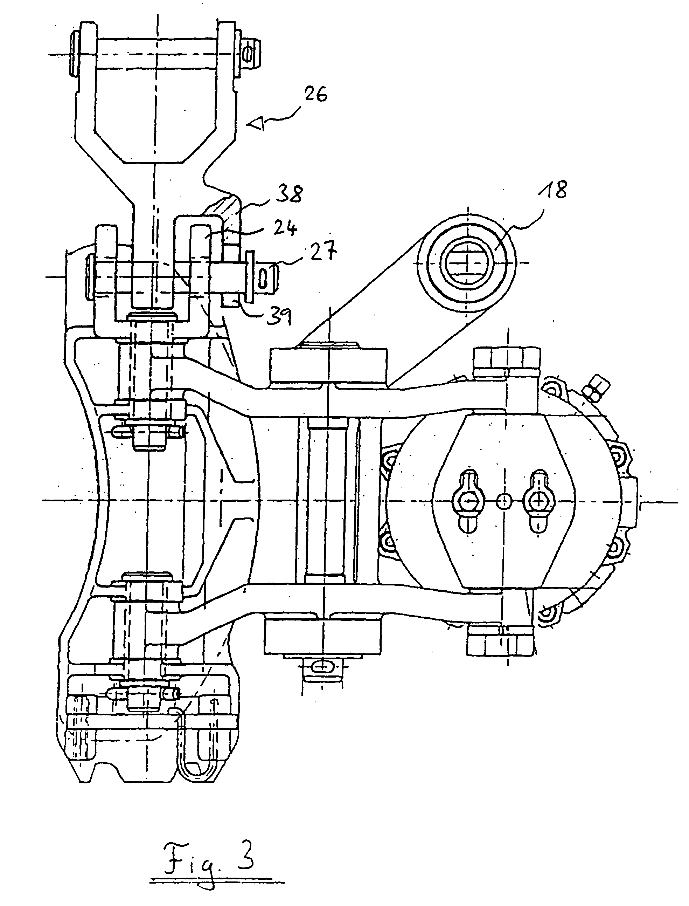

Fig. 3 zeigt eine Einbauvariante der Fig. 1, wobei hier die Haltelasche 26 anders herum eingebaut ist, d.h. der Führungsarm 38 ist hier auf der Seite der Zugstange 18 angeordnet. Dementsprechend ragt der Lagerungsbolzen 27 hier über den Seitenschenkel 24 hinaus, wo er in die Führungsausnehmung 39 eingreift.

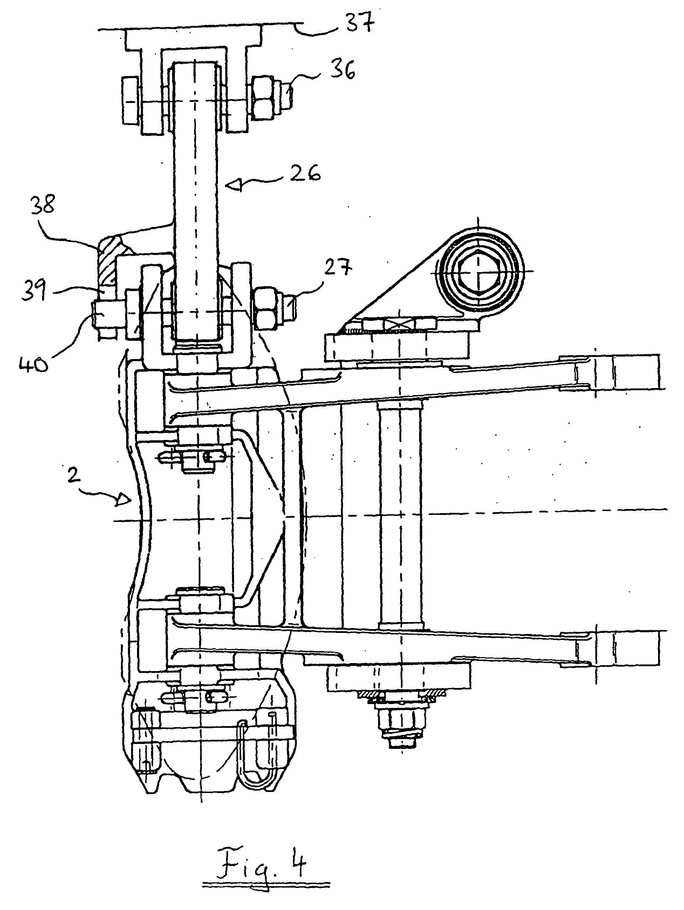

Fig. 4 zeigt ein Ausführungsbeispiel mit einer I-förmigen, d.h. "einarmigen" Hängelasche 26. Analog zum Ausführungsbeispiel der Fig. 1 ist die Hängelasche 26 über einen Lagerungsbolzen 36 mit dem Drehgestell 37 und über einen Lagerungsbolzen 27 mit der Bremsbacke 2 verbunden.

Ähnlich wie bei der Y-förmigen Hängelasche 26 der Fig. 2 "zweigt" auch hier etwa in der Mitte der Hängelasche 26 ein Führungsarm 38 ab, der mit seiner Führungsausnehmung 39 den Führungskopf 40 des Lagerungsbolzens 27 umgreift.

Alternativ zu den in den Fig. 1, 3 und 4 gezeigten Ausführungsbeispielen kann die Haltelasche auch um 180° gedreht angeordnet sein, d.h. der Führungsarm kann auch auf der Seite des Drehgestells (37) angeordnet sein.

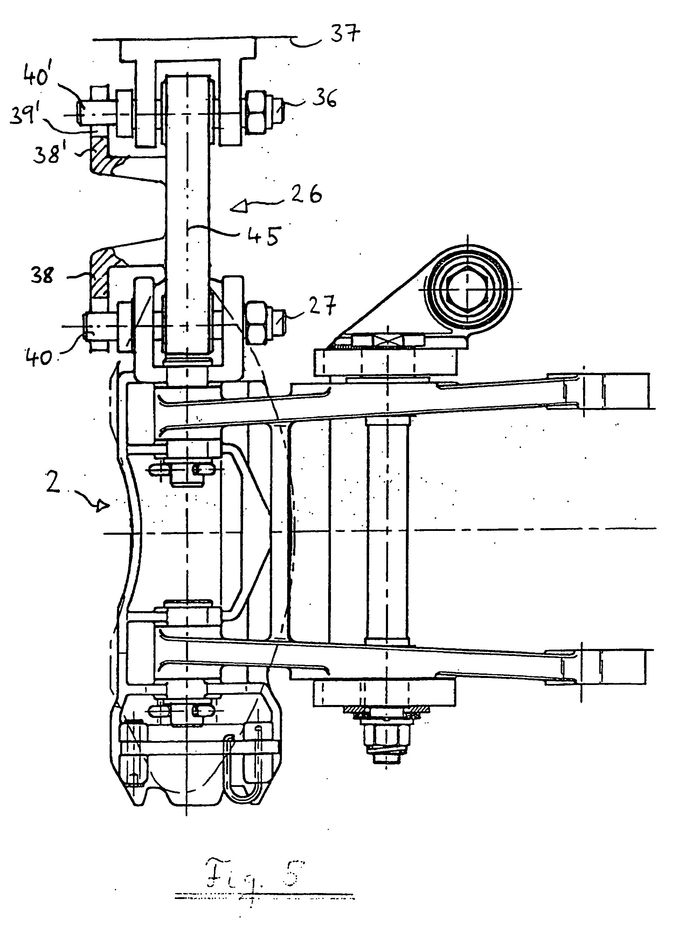

Fig. 5 zeigt ein Ausführungsbeispiel einer I-förmigen Hängelasche 26, bei der im Unterschied zu Fig. 4 zwei Führungsarme vorgesehen sind, nämlich ein erster Führungsarm 38 und ein zweiter Führungsarm 38'. Die Hängelasche 26 ist über einen Lagerungsbolzen 36 mit dem Drehgestell 37 und über den Lagerungsbolzen 27 mit der Bremsbacke 2 verbunden. Entsprechend dem Lagerungsbolzen 27 mit seinem Führungskopf 40 weist hier auch der Lagerungsbolzen 36 einen Führungskopf 40' auf, der in einer Führungsausnehmung 39' des Führungsarms 38' längsverschieblich geführt ist. Mit einer derartigen I-Hängelasche mit "zweifacher Parallelführung" ist eine noch exaktere Führung der Bremsbacke 2 möglich.

Bei dem in Fig. 5 gezeigten Ausführungsbeispiel liegen die beiden Führungsarme 38, 38' in Bezug auf eine Längsachse 45 auf ein und derselben Seite der Hängelasche 26. Alternativ dazu kann auch einer der beiden Führungsarme 38, 38' "gespiegelt" bezüglich der Längsachse 45 angeordnet sein, d.h. die beiden Führungsarme 38, 38' können auf gegenüberliegenden Seiten der Hängelasche 26 angeordnet sein.

## Patentansprüche

1. Abstützvorrichtung für Bremsbacken von Schienenfahrzeugen, bei der eine Bremsbacke über ein erstes Schwenkgelenk (27) mit einer Hängelasche (26) verbunden ist, wobei die Hängelasche über ein zweites Schwenkgelenk (36) mit einem Bremskräfte aufnehmenden Teil (37) des Schienenfahrzeugs verbunden ist,
**dadurch gekennzeichnet,**
**dass** die Hängelasche (26) im Bereich eines der beiden Schwenkgelenke (27) einen Führungsarm (38) aufweist, der parallel zu einer Längsachse der Hängelasche (26) verläuft und eine längliche Ausnehmung (39) aufweist, in welcher ein Gelenkbolzen (27, 40) des zugeordneten Schwenkgelenks (27) parallel zur Längsachse (45) der Hängelasche (26) verschieblich ist.

2. Abstützvorrichtung nach Anspruch 1, **dadurch gekennzeichnet,**
**dass** der Gelenkbolzen (27, 40) die Ausnehmung (39) durchsetzt.

3. Abstützvorrichtung nach Anspruch 1 oder 2, **dadurch gekennzeichnet,**
**dass** der Gelenkbolzen (27, 40) und der Führungsarm (38) im Bereich der Ausnehmung (39) einander berührende Führungsflächen aufweisen, die eben sind.

4. Abstützvorrichtung nach einem der Ansprüche 1 bis 3, **dadurch gekennzeichnet,**
**dass** der Führungsarm (38) gabelförmig einseitig offen ist.

5. Abstützvorrichtung nach einem der Ansprüche 1 bis 4, **dadurch gekennzeichnet,**
**dass** im Bereich zwischen dem Gelenkbolzen (27, 40) und der Ausnehmung (39) des Führungsarmes (38) ein elastisches Element angeordnet ist.

6. Abstützvorrichtung nach Anspruch 5, **dadurch gekennzeichnet,**
**dass** das elastische Element an einer Innenseite der Ausnehmung (39) angeordnet ist.

7. Abstützvorrichtung nach Anspruch 5 oder 6, **dadurch gekennzeichnet,**
**dass** das elastische Element an einer Außenseite des Gelenkbolzens (27, 40) angeordnet ist.

8. Abstützvorrichtung nach einem der Ansprüche 1 bis 7, **dadurch gekennzeichnet,**
**dass** die Hängelasche (26) Y-förmig ist und dass der Führungsarm (38) dem Doppelarm (30, 31) der Hängelasche (26) gegenüberliegend und parallel zu dem Einzelarm (25) angeordnet ist.

9. Abstützvorrichtung nach einem der Ansprüche 1 bis 7, **dadurch gekennzeichnet,**
**dass** die Hängelasche (26) I-förmig ist und der Führungsarm (38) sich von einem Mittelbereich der Haltelasche (26) aus hin in Richtung eines freien Endes der Haltelasche (26) erstreckt.

10. Abstützvorrichtung nach einem der Ansprüche 1 bis 7, **dadurch gekennzeichnet,**
**dass** die Hängelasche (26) I-förmig ist und zwei Führungsarme (38, 38') vorgesehen sind, die sich jeweils von einem Mittelbereich der Haltelasche (26) aus hin in Richtung zu den freien Enden der Hängelasche (26) erstrecken, wobei die beiden Gelenkbolzen (27, 40; 36, 40') parallel zur Längsachse (45) der Hängelasche (26) verschieblich in den Führungsarmen (38, 38') geführt sind.

11. Abstützvorrichtung nach Anspruch 10, **dadurch gekennzeichnet,**
**dass** die beiden Führungsarme (38, 38') in Bezug auf die Längsachse (45) der Hängelasche (26) auf derselben Seite angeordnet sind.

12. Abstützvorrichtung nach Anspruch 10, **dadurch gekennzeichnet,**
**dass** die beiden Führungsarme (38, 38') in Bezug auf die Längsachse (45) der Hängelasche (26) auf gegenüberliegenden Seiten angeordnet sind.

## Claims

1. Support device for brake shoes of rail vehicles, in which a brake shoe is connected via a first swivel joint (27) to a suspension plate (26), the said suspension plate being connected via a second swivel joint (36) to a part (37) of the rail vehicle which absorbs braking forces,
**characterised in that**
in the area of one of the two swivel joint (27), the suspension plate (26) has a guide arm (38) which extends parallel to a longitudinal axis of the suspension plate (26) and has an elongated recess (39), in which a joint pin-bolt (27, 40) of the associated swivel joint (27) can move parallel to the longitudinal axis (45) of the suspension plate (26).

2. Support device according to Claim 1,
**characterised in that**
the joint pin-bolt (27, 40) passes through the recess (39).

3. Support device according to Claims 1 or 2,
**characterised in that**
in the area of the recess (39) the joint pin-bolt (27, 40) and the guide arm (38) have guide surfaces in mutual contact, which are flat.

4. Support device according to any of Claims 1 to 3,
**characterised in that**
the guide arm (38) is open on one side, in a fork shape.

5. Support device according to any of Claims 1 to 4,
**characterised in that**
an elastic element is arranged in the area between the joint pin-bolt (27, 40) and the recess (39) of the guide arm (38).

6. Support device according to Claim 5,
**characterised in that**
the elastic element is arranged on the inside of the recess (39).

7. Support device according to Claims 5 or 6,
**characterised in that**
the elastic element is arranged on the outside of the joint pin-bolt (27, 40).

8. Support device according to any of Claims 1 to 7,
**characterised in that**
the suspension plate (26) is Y-shaped and the guide arm (38) is arranged opposite the double arm (30, 31) of the suspension plate (26) and parallel to the single arm (25).

9. Support device according to any of Claims 1 to 7,
**characterised in that**
the suspension plate (26) is I-shaped and the guide arm (38) extends from a central area of the suspension plate (26) towards one of the free ends of the suspension plate (26).

10. Support device according to any of Claims 1 to 7,
**characterised in that**
the suspension plate (26) is I-shaped and two guide arms (38, 38') are provided, each extending from a central area of the suspension plate (26) towards the free ends of the suspension plate (26), and the two joint pin-bolts (27, 40; 36, 40') can move and are guided in the guide arms (38, 38') parallel to the longitudinal axis (45) of the suspension plate (26).

11. Support device according to Claim 10,
**characterised in that**
relative to the longitudinal axis (45) of the suspension plate (26), the two guide arms (38, 38') are arranged on the same side.

12. Support device according to Claim 10,
**characterised in that**
relative to the longitudinal axis (45) of the suspension plate (26), the two guide arms (38, 38') are arranged on opposite sides.

## Revendications

1. Dispositif de support de patin de frein des véhicules ferroviaires, dans lequel un patin de frein est raccordé via une première articulation pivotante (27) à une attache de suspension (26), ladite attache de suspension étant reliée, via une deuxième articulation pivotante (36), à une partie (37) du véhicule ferroviaire, qui absorbe des forces de freinage,
**caractérisé en ce**
**que** ladite attache de suspension (26) comprend un bras de guidage (38) dans la zone de l'une desdites deux articulations pivotantes (27), ce bras s'étendant en parallèle à un axe longitudinal de ladite attache de suspension (26) et présentant un creux allongé (39), dans lequel un axe d'articulation (27, 40) de l'articulation pivotante (27) affectée est déplaçable en parallèle à l'axe longitudinal (45) de ladite attache de suspension (26).

2. Dispositif de support selon la revendication 1, **caractérisé en ce**
**que** ledit axe d'articulation (27, 40) passe à travers ledit creux (39).

3. Dispositif de support selon la revendication 1 ou 2, **caractérisé en ce**
**que** ledit axe d'articulation (27, 40) et ledit bras de guidage (38) présentent des surfaces de guidage, l'une en contact avec l'autre, dans la zone dudit creux (39), qui sont planes.

4. Dispositif de support selon une quelconque des revendications 1 à 3, **caractérisé en ce**
**que** ledit bras de guidage (38) est ouvert, d'un côté, sous forme fourchée.

5. Dispositif de support selon une quelconque des revendications 1 à 4, **caractérisé en ce**
**qu'**un élément élastique est disposé dans la zone entre ledit axe d'articulation (27, 40) et ledit creux (39) dudit bras de guidage (38).

6. Dispositif de support la revendication 5, **caractérisé en ce**
**que** ledit élément élastique est disposé à une face intérieure dudit creux (39).

7. Dispositif de support selon la revendication 5 ou 6, **caractérisé en ce**
**que** ledit élément élastique est disposé à une face extérieure dudit axe d'articulation (27, 40).

8. Dispositif de support selon une quelconque des revendications 1 à 7, **caractérisé en ce**
**que** ladite attache de suspension (26) a une forme en Y, et en ce que ledit bras de guidage (38) est disposé en opposition au bras double (30, 31) de ladite attache de suspension (26) et en parallèle audit bras unique (25).

9. Dispositif de support selon une quelconque des revendications 1 à 7, **caractérisé en ce**
**que** ladite attache de suspension (26) a une forme en I, et en ce que ledit bras (38) s'étend à partir d'une zone centrale de ladite attache de suspension (26) en direction vers une extrémité libre de ladite attache de suspension (26).

10. Dispositif de support selon une quelconque des revendications 1 à 7, **caractérisé en ce**
**que** ladite attache de suspension (26) a une forme en I et que deux bras de guidage (38, 38') sont disposés, dont chacun s'étend à partir d'une zone centrale de ladite attache de suspension (26) en direction vers les extrémités libres de ladite attache de suspension (26), auxdits deux axes d'articulations (27, 40 ; 36, 40') étant guidés, de manière glissante, en parallèle à l'axe longitudinal (45) de ladite attache (26) dans lesdits bras de guidage (38, 38').

11. Dispositif de support selon la revendication 10, **caractérisé en ce**
**que** lesdits deux bras de guidage (38, 38') sont disposés du même côté, relativement à l'axe longitudinal (45) de ladite attache de suspension (26).

12. Dispositif de support selon la revendication 10, **caractérisé en ce**
**que** lesdits deux bras de guidage (38, 38') sont disposés aux côtés opposés, relativement à l'axe longitudinal (45) de ladite attache de suspension (26).
